# EUROPÄISCHE PATENTSCHRIFT

(11) **EP 3 074 118 B1**
(45) Veröffentlichungstag und Bekanntmachung des Hinweises auf die Patenterteilung: **03.07.2019**
(21) Anmeldenummer: 14806222.7
(22) Anmeldetag: 26.11.2014
(51) Int. Cl.: B01J 2/20, C10L 5/44, F28D 7/00, F28D 7/08

(54) **ANLAGE ZUR HERSTELLUNG VON HOLZPELLETS ODER ANDEREN FESTEN GRANULATEN AUS KLEINSTÜCKIGEM MATERIAL ORGANISCHEN/PFLANZLICHEN URSPRUNGS**
PLANT FOR THE PRODUCTION OF WOOD PELLETS OR OTHER SOLID GRANULATES FROM SMALL PIECES OF ORGANIC/PLANT MATERIAL
INSTALLATION DE FABRICATION DE GRANULÉS DE BOIS OU D'AUTRES GRANULÉS SOLIDES À PARTIR DE PETITS MORCEAUX DE MATIÈRE D'ORIGINE ORGANIQUE/VÉGÉTALE

(30) Priorität: 27.11.2013 DE 102013224204
(43) Veröffentlichungstag der Anmeldung: 05.10.2016
(73) Patentinhaber: Cebcon Technologies GmbH, 22335 Hamburg (DE)
(72) Erfinder: DETZEL, Valery, 22335 Hamburg (DE)
(74) Vertreter: Hauck Patentanwaltspartnerschaft mbB
(86) Internationale Anmeldenummer: PCT/EP2014/075692
(87) Internationale Veröffentlichungsnummer: WO 2015/078925

(56) Entgegenhaltungen:
- EP-A1- 2 330 371
- WO-A1-00/26593
- DE-B3-102006 061 340

## Beschreibung

Die Erfindung bezieht sich auf eine Anlage zur Herstellung von Holzpellets oder anderen festen Granulaten aus kleinstückigem Material organischen und/oder pflanzlichen Ursprungs, geeignet zur automatischen Beschickung von Energierzeugungsanlagen oder anderen Verbrauchern mit Einrichtungen zum Aufgeben, Aufbereiten, Trocknen, Pressen, Kühlen und Abgeben des Materials, die zumindest teilweise in einzeln transportierbaren und baukastenartig zu zumindest einem Teil der Anlage zusammensetzbaren Containern angeordnet sind.

Holzpellets sind stäbchenförmige Granulate, die aus Säge- oder Hobelspänen, Hackschnitzeln, Holzsschreddergut oder anderen Nebenprodukten oder Abfällen der Holz- und Forstwirtschaft bestehen. Andere feste Granulate aus kleinstückigem Material organischen und/oder pflanzlichen Ursprungs können zum Beispiel aus Stroh, Sonnenblumenschalen, Olivenkernen und Olivenpresstrester, Reisschalen und anderen biogenen Reststoffen zum Beispiel der Agrarwirtschaft und Lebensmittelindustrie hergestellt werden.

Bei der Herstellung von Holzpellets wird das zugeführte Material zwecks Pelletierung aufbereitet, z.B. durch Zerkleinern, Trocknen und Konditionieren. Aus dem aufbereiteten Material werden die Pellets gepresst. Hierzu wird z.B. eine Kollergangpresse verwendet, in der das Material durch eine Matrize mit Bohrungen gemäß dem gewünschten Pelletdurchmesser hindurchgepresst wird. Das im Material enthaltene Lignin wird durch die Erwärmung beim Konditionieren bzw. beim Pressvorgang freigesetzt und verbindet die einzelnen Holzteilchen miteinander. Zusätzlich zu dem im Holz vorhandenen Lignin kann weiteres Bindemittel zugesetzt werden. Ein Messer schneidet die Pelletstränge nach dem Austritt aus der Matrize auf die gewünschte Länge. Danach werden die Pellets gekühlt und damit verfestigt.

Anlagen zur Herstellung von Holzpellets oder anderen festen Granulaten aus kleinstückigem Material organischen/pflanzlichen Ursprungs werden in der Regel von Ingenieurbüros oder Anlagenbauern standortbezogen als Einzelprojekte geplant und entwickelt. Dabei werden Maschinen und Aggregate verschiedener Hersteller integriert und Schnittstellen und die Materialübergabe im Einzelfall bezogen auf die jeweilige Situation gelöst. Dies erfordert oft Anpassungen und Nachbesserungen während der Montage und erhöhte Betriebskosten während des Betriebs der Anlage.

Herkömmliche Pelletieranlagen haben den Nachteil hoher Investitionskosten, da ein Basic-Engineering, eine Detailplanung und Architektenleistungen am Aufstellungsort erbracht werden müssen. Das Kostenrisiko wird dadurch erhöht, dass es sich um Einzelbestellungen (teilweise Einzelfertigung) handelt. Ferner besteht eine Schnittstellenproblematik zwischen verschiedenen Gewerken mit der Notwendigkeit von Anpassungen. Bei jeder Anlage muss eine sichere Betriebsführung durch Optimierung der Prozesse etabliert werden. Da es sich um einzeln geplante Anlagen handelt, ist der Aufwand für die Ersatzteilhaltung hoch. Die Projektrealisierung vor Ort erfordert eine lange Planungs- und Vorbereitungsphase. Hinzu kommen lange Montagezeiten und unsichere Inbetriebnahmezeiten.

Die EP 1 849 851 A2 beschreibt eine Vorrichtung zur Herstellung von Holzpellets aus zerkleinertem Holzgut, die einfach und preiswert in ihrer Errichtung sowie in ihrem weiteren Betrieb und zudem transportabel sein soll. Sie soll dabei leicht an neue Erfordernisse, wie etwa geänderte Verarbeitungsmengen, adaptierbar sein. Hierfür hat die Vorrichtung ein Rahmengerüst mit daran montierten Trageplatten oder Tragegittern zur Befestigung von Vorbehälter, Presse, Kühler und Entstaubungseinrichtung. Am Rahmengerüst sind Verkleidungsplatten befestigbar. Das Rahmengerüst und die daran befestigten Anlagenteile sind ein transportables Produktionsmodul mit vorgegebener Verarbeitungsmenge. Bei Bedarf können mehrere dieser Produktionsmodule kombiniert werden, um die Verarbeitungsmenge auf diese Weise zu erhöhen, ohne die Anlagenteile eines Produktionsmoduls in ihrer Dimensionierung zu verändern. Nachteilig ist der hohe Aufwand für den Transport der gesamten Anlage in einem Stück und die Anpassung an den Bedarf durch Kombination mehrerer kompletter Produktionsmodule.

Die DE 10 2006 061 340 B3 beschreibt eine Einrichtung zum Herstellen von Holzpellets mit zumindest jeweils einem Baugruppen-Modul zum Aufgeben, Trocknen, Pressen und Austragen. Die BaugruppenModule sind in vertikaler Anordnung der jeweiligen Funktions-Baugruppen in weltweit handelsüblichen Containern (12- oder 20-Fuß-Container) eingebracht. Mehrere, eine horizontale und/oder vertikale Reihe bildende Container sind mittels elektrischer und/oder pneumatischer Medienleitungen untereinander verbunden und einer der Container ist an eine örtlich vorhandene Medienquelle anschließbar. Vorteilhaft sind die leichte und schnelle Montage der Anlage, die aus vorbereiteten Baugruppen-Modulen besteht. Die Anlage kann leicht an einen anderen Ort verlegt werden und muss nur zeitabhängig ortsgebunden sein. Nachteilig ist, dass sich ein Trocknungsschacht vertikal über mehrere aufeinandergestapelte Container erstreckt, die beim Transport voneinander getrennt sind und am Einsatzort miteinander verbunden werden müssen. Weiterhin nachteilig ist die begrenzte Leistung des Gegenluftkühlers und der hohe Energiebedarf für Aspiration und die Abtrennung des Holzstaubes. Dieser umfasst einen von oben mit Pellets befüllbarer Behälter, der von unten mit Kühlluft durchströmbar ist und aus dem die Pellets nach dem Abkühlen unten abgelassen werden. Weiterhin nachteilig ist die räumliche Zuordnung und vorgeschlagene Aufstellung der Baugruppenmodule, die das Schadensrisiko im Falle von Bränden erheblich erhöhen und Löscheinsätze erschweren. Ferner ist der hohe Energieaufwand insbesondere für das Erwärmen des Rohstoffes im Reife-Behälter durch Zuführung von extra generierter Energie nachteilig.

Davon ausgehend liegt der Erfindung die Aufgabe zugrunde, eine Anlage zur Herstellung von Holzpellets oder anderen festen Granulaten zu schaffen, die mit geringerem Aufwand transportierbar, aufstellbar und an einen anderen Ort versetzbar ist, sowie einen energieoptimierten Betrieb ermöglicht. Die Aufgabe wird durch eine Anlage mit den Merkmalen von Anspruch 1 gelöst.

Die erfindungsgemäße Anlage zur Herstellung von Holzpellets oder anderen festen Granulaten aus kleinstückigem Material organischen und/oder pflanzlichen Ursprungs umfasst Einrichtungen zum Aufgeben, Aufbereiten, Trocknen, Pressen, Kühlen und Abgeben des Materials, die zumindest teilweise in einzeln transportierbaren und baukastenartig zu zumindest einem wesentlichen Teil der Anlage zusammensetzbaren Containern angeordnet sind, wobei mindestens die Einrichtung zum Kühlen in Ausführung als Schachtkühler vollständig in einem Container angeordnet ist.

Gemäß einer Ausgestaltung umfasst die erfindungsgemäße Anlage einen Wärmepufferspeicher, dem das erhitzte Kühlmedium aus dem Kühlmediumaustritt der Einrichtung zum Kühlen zugeführt und aus dem abgekühltes Kühlmedium abgezogen und dem Kühlmediumeintritt der Einrichtung zum Kühlen zugeführt wird und aus dem erwärmtes Heizmedium abgezogen und dem Heizmediumeintritt eines Wärmeverbrauchers zugeführt und dem abgekühltes Heizmedium aus einem Heizmediumaustritt des Wärmeverbrauchers zugeführt wird.

Gemäß einer weiteren Ausgestaltung ist mindestens eine der genannten Einrichtungen zum Aufgeben, Aufbereiten, Trocknen, Pressen, Kühlen und Abgeben in einem Container mit vertikal ausgerichteter Längsachse angeordnet.

Gemäß einer weiteren Ausgestaltung ist mindestens ein Container eine Containerhülle aufweist und mindestens ein Strukturelement einer der genannten Einrichtungen zum Aufgeben, Aufbereiten, Trocknen, Pressen, Kühlen und Abgeben mindestens teilweise Bestandteil der Containerhülle.

Sämtliche Lösungen basieren auf Containern, die jeweils Maschinen, Aggregate, Fördereinrichtungen, Steuerungseinrichtungen und/oder andere Komponenten der Anlage enthalten. Die Container sind einzeln transportierbar und zumindest zu einem wesentlichen Teil der Anlage zusammensetzbar. Jeweils ein Container oder mehrere Container gemeinsam bilden eine Einheit (Modul) der Anlage. Module der Anlage sind insbesondere die Einrichtungen zum Aufgeben, Aufbereiten, Trocknen, Pressen, Kühlen und Abgeben des Materials. Die Erfindung ermöglicht die Bereitstellung standardisierter Module aus standardisierten Containern.

Die Container sind mit Komponenten der Anlage entsprechend dem jeweils aktuellen Entwicklungsstand bestückbar. Die Komponenten sind vorzugsweise in den Containern fest montiert. Die eingesetzten vielfältigen mechanischen und elektrischen Komponenten können auf einige wenige Typen reduziert werden. Bei der Auswahl und Zusammenstellung der Komponenten kann die Energieeffizienz und Qualität optimiert und sichergestellt werden. Die Einheiten sind im Werk mit hohem Vorfertigungsgrad bzw. schlüsselfertig herstellbar. Die Container sind kostengünstig auf Schiene, Straße oder Wasserweg vom Werk zum Einsatzort oder vom früheren Einsatzort zu einem neuen Einsatzort transportierbar. Abhängig von den jeweiligen Bedingungen und Erfordernissen des Einsatzortes werden die Container nach dem Baukastenprinzip zur vollständigen Anlage zusammengesetzt. Das Aufstellungslayout ist flexibel und an den jeweiligen Einsatzort anpassbar.

Bei der Lösung gemäß Anspruch 1 wird durch die vollständige Anordnung der Einrichtung zum Kühlen (Kühler) in Ausführung als Schachtkühler in nur einem Container der Aufwand für Transport und Montage vermindert und der Platzbedarf reduziert. Bei der Lösung gemäß Anspruch 2 wird durch die Wärmerückgewinnung aus dem Kühler in einen Wärmepufferspeicher (Pufferspeicher), dessen Wärme einem Wärmeverbraucher zugeführt wird, eine mit geringem Aufwand transportier- und aufstellbare Pelletieranlage geschaffen, die einen energieoptimierten Betrieb ermöglicht. Bei der Lösung gemäß Anspruch 3 begünstigt die Unterbringung von Einrichtungen in einem Container mit vertikal ausgerichteter Längsachse einen einfachen Transport, eine kostengünstige Montage und eine platzsparende Anordnung von Trocknern, Kühlern oder anderen langgestreckten Komponenten, die ansonsten auf mehrere Container verteilt und erst am Standort zusammengesetzt werden müssten. Durch die vertikal ausgerichtete Längsachse wird der Grundflächenbedarf der Anlage verringert. Bei der Lösung gemäß Anspruch 4 wird durch die integrale Ausbildung der Containerhülle und einer darin angeordneten Einrichtung Material und Gewicht eingespart und hierdurch ein einfacher Transport, eine kostengünstige Montage und eine platzsparende Anordnung begünstigt.

Die erfindungsgemäßen Lösungen haben den Vorteil, dass sie die Herstellung von standardisierbaren Anlagen aus ohne Schnittstellenproblematik zusammensetzbaren Containern ermöglichen, die erprobte, geprüfte, aufeinander abgestimmte und dem neuesten Entwicklungsstand entsprechende Komponenten enthalten. Eine spezielle Anfertigung einzelner Komponenten kann entfallen.

Da die Anlagen nahezu baugleich sind und vorzugsweise ein standardisiertes Steuerungssystem haben, kann eine Schulung und Einarbeitung von Personal vor der Inbetriebnahme der Anlage an einer Musteranlage (Master) erfolgen. Die Sicherheit der Betriebsführung wird durch Optimierung von Komponenten und vorbeugende Instandhaltung von Komponenten verbessert. Die Ersatzteilhaltung vor Ort kann durch Einsatz weniger, immer gleicher Fabrikate und ein Zentrallager reduziert bzw. optimiert werden. Die Planungs- und Vorbereitungsphase der Realisierung des Projektes vor Ort wird stark verkürzt. Ebenso werden die langen Montagezeiten vor Ort vermindert. Reduziert werden auch die Investitionskosten, da das Basic-Engineering, die Detailplanung sowie ein Großteil der Architektenleistungen entfallen. Das Kostenrisiko der Investitionen wird reduziert, da die Technik aus Serien- oder Kleinserienproduktion zum Festpreis angeboten werden kann.

Gemäß einer Ausgestaltung weist der Container die Abmessungen eines 20-Fuß- oder eines 40-Fuß-Containers oder eines anderen Standardcontainers auf. Dies ist vorteilhaft für den Transport des Containers unter Einsatz vorhandener Transportmittel. Gemäß einer bevorzugten Ausgestaltung weist der Container die Eigenschaften (z.B. Stapelbarkeit, Transportierbarkeit, Verzurrung miteinander) von Standardcontainern auf. Gemäß einer weiteren Ausgestaltung ist der Container eine Rahmenkonstruktion mit offenen Wänden oder einer oder mehreren geschlossenen Wänden. Die Rahmenkonstruktion weist einen Rahmen aus mehreren Rahmenteilen auf. Bei einer offenen Rahmenkonstruktion umgeben Rahmenteile Öffnungen, die nicht durch Wände ausgefüllt sind. Bei einer geschlossenen Rahmenkonstruktion sind die Öffnungen zwischen Rahmenteilen durch Wände ausgefüllt bzw. geschlossen. Mischformen mit einer teilweise offenen und teilweise geschlossenen Rahmenkonstruktion sind ebenfalls Bestandteile der Erfindung. Vorzugsweise ist die Rahmenkonstruktion quaderförmig, wobei die Rahmenteile die Kanten des Quaders definieren.

Die Ausführung als Rahmenkonstruktion reduziert Gewicht und Kosten. Zudem begünstigt sie Montage, Betrieb und Wartung der Anlage.

Alternativ ist der Container ein herkömmlicher Standardcontainer mit geschlossenen Wänden. Gemäß einer Ausgestaltung ist der Container durch an den Rändern miteinander verbundene Wände gebildet. Gegebenenfalls sind die Wände und/oder die Verbindungen benachbarter Wände miteinander an den Ecken und/oder Kanten des Containers verstärkt.

Bei Ausführung des Containers als Rahmenkonstruktion mit offenen Wänden bilden die Rahmenteile die Containerhülle. Bei Ausführung des Containers als Rahmenkonstruktion mit einer oder mehreren geschlossenen Wänden bilden die Rahmenteile und die diese ausfüllenden Wände die Containerhülle. Bei Ausführung des Containers als Kasten aus randseitig miteinander verbundenen Wänden bilden die Wände die Containerhülle. Bei der Lösung gemäß Anspruch 4 ist mindestens ein Strukturelement einer zumindest teilweise in dem Container angeordneten Einrichtung ein Bestandteil der Containerhülle. Bei der Einrichtung handelt es sich um eine der Einrichtungen zum Aufgeben, Aufbereiten, Trocknen, Pressen, Kühlen und Abgeben des kleinstückigen Materials. Gemäß einer bevorzugten Ausgestaltung ist mindestens ein Strukturelement der Einrichtung Bestandteil mindestens einer Wand und/oder mindestens eines Rahmenteils des Rahmens. Gemäß einer weiteren Ausgestaltung ist mindestens eine Seitenwand und/oder mindestens ein Rahmenteil einer Einrichtung Bestandteil einer Wand und/oder eines Rahmenteils des Containers. Beispielsweise ist mindestens eine Seitenwand eines Kühlergehäuses des Kühlers, das einen Raum begrenzt, in dem das zu kühlende Granulat gekühlt wird, Bestandteil einer Wand des Containers oder bildet die gesamte Wand des Containers. Bei einem anderen Beispiel ist mindestens eine Seitenwand eines Gehäuses des Trockners oder eines Wärmpufferspeichers Bestandteil einer Wand des Containers oder bildet die gesamte Wand des Containers. Vorzugsweise sind mehrere Seitenwände der Einrichtung zugleich Wände des Containers oder Bestandteile derselben.

Gemäß einer weiteren Ausgestaltung ist die Einrichtung zum Trocknen ein Bandtrockner, der in einem oder mehreren Containern mit horizontal ausgerichteter Längsachse angeordnet ist. Hierdurch ist der vom Container umgrenzte Raum optimal nutzbar. Gemäß einer weiteren Ausgestaltung ist die Einrichtung zum Kühlen in einem Container mit vertikal ausgerichteter Längsachse angeordnet. Hierdurch ist insbesondere bei Ausführung der Einrichtung zum Kühlen als Schachtkühler der vom Container umgrenzte Raum optimal nutzbar.

Gemäß einer weiteren Ausgestaltung ist mindestens eine der nachfolgenden Einrichtungen vollständig in einem Container untergebracht: Einrichtung zum Aufgeben, Sieb, Nasszerkleinerer, Puffer- und Dosierbehälter, Einrichtung zum Trocknen (z.B. Badtrockner), Trockenmühle, Konditionierer, Mischschnecke, Einrichtung zum Pressen, Einrichtung zum Kühlen (z.B. Schachtkühler), Wärmepufferspeicher, Einrichtung zum Lagern oder Einrichtung zum Abgeben des Materials. Die genannten Einrichtungen sind so kompakt ausführbar, dass sie jeweils in nur einem einzigen Container untergebracht werden können. Ggf. werden mehrere dieser Einrichtungen in einem einzigen Container untergebracht. Große Anlagen können mehrere gleiche Einrichtungen aufweisen, die jeweils in einem gesonderten Container untergebracht sind, die parallel betrieben werden.

Gemäß einer weiteren Ausgestaltung weist die Anlage mehrere Einrichtungen zum Kühlen in Ausführungen als Schachtkühler auf, die jeweils vollständig in einem Container angeordnet sind. Dies begünstigt Anlagen mit besonders hoher Durchsatzleistung unter Einsatz standardisierter Container.

Gemäß einer weiteren Ausgestaltung ist mindestens eine der nachfolgenden Einrichtungen in einem Container mit horizontal ausgerichteter Längsachse angeordnet: Einrichtung zum Aufgeben, Einrichtung zum Aufbereiten und Pressen, Einrichtung für die Produktabgabe. Gemäß einer weiteren Ausgestaltung ist mindestens eine der nachfolgenden Einrichtung in einem Container mit vertikal ausgerichteter Längsachse untergebracht: Einrichtung zum Zwischenlagern oder Einrichtung zum Lagern. Die genannten Einrichtungen eignen sich jeweils besonders für die Unterbringung in einem Container mit horizontal bzw. mit vertikal ausgerichteter Längsachse.

Gemäß einer weiteren Ausgestaltung umfasst der Schachtkühler mehrere Rohrmäander, die parallel, mit Abstand voneinander und um den halben Abstand ihrer horizontalen Rohrabschnitte höhenversetzt zueinander angeordnet sind. Die Rohrmäander sind vorzugsweise vertikal ausgerichtet. Das Material wird beim Durchlaufen durch die zwischen den Rohrmäandern gebildeten Schächte des Schachtkühlers von den horizontalen Rohrabschnitten der Rohrmäander abwechselnd in die eine und in die andere Richtung horizontal abgelenkt. Der Schachtkühler kühlt die Holzpellets oder andere feste schüttfähige Biobrennstoffe besonders effektiv und schonend (insbesondere unter Vermeidung von Staubbildung und hohen Abluftmengen) und hat einen geringen Grundflächen- und Raumbedarf.

Gemäß einer weiteren Ausgestaltung sind die horizontalen Rohrabschnitte jedes Rohrmäanders durch vertikale Stege miteinander verbunden. Die vertikalen Stege verbessern die Stabilität des Rohrmäanders. Zudem bewirken sie eine für die gleichmäßige Kühlung vorteilhafte Führung des zu kühlenden Materials und vergrößern die Wärmetauscherfläche.

Die Rohrmäander sind beispielsweise aus gebogenen Rohren gebildet, zwischen die Stege eingesetzt sind. Gemäß einer anderen Ausgestaltung sind die Rohrmäander und Stege gebildet aus umgeformten (z.B. mittels Tiefziehverfahren oder Innenhochdruckumformverfahren) und mit einander verbundenen Metallplatten, analog zu bekannten Flachheizkörpern aus Stahlblech.

Gemäß einer weiteren Ausgestaltung weist der Schachtkühler unten einen Austragsboden mit einstellbarem Öffnungsquerschnitt zum Regeln des Füllstands des Materials innerhalb der Schächte auf und/oder weist der Schachtkühler oben eine Aufgabeeinrichtung zum gleichmäßigen Verteilen des Materials auf die verschiedenen Schächte auf. Mittels des Austragsbodens und/oder der Aufgabeeinrichtung ist der Schachtkühler besonders effektiv betreibbar.

Gemäß einer weiteren Ausgestaltung ist ein Wärmepufferspeicher vorhanden, dem das erhitzte Kühlmedium aus dem Kühlmediumaustritt der Einrichtung zum Kühlen zugeführt, aus dem abgekühltes Kühlmedium abgezogen und dem Kühlmediumeintritt der Einrichtung zum Kühlen zugeführt wird, aus dem erwärmtes Heizmedium abgezogen und dem Heizmediumeintritt eines Wärmeverbrauchers zugeführt und dem abgekühlten Heizmedium aus einem Heizmediumaustritt des Wärmeverbrauchers zugeführt wird. Durch die Nutzung der vom Kühlmedium aufgenommenen Wärmemenge für den Wärmeverbraucher wird ein besonders energieeffizienter Betrieb der Anlage erreicht. Der Wärmepufferspeicher begünstigt einen effizienten Betrieb der Anlage bei schwankendem Wärmebedarf des Wärmeverbrauchers.

Gemäß einer weiteren Ausgestaltung ist der Wärmepufferspeicher ein Schichtenspeicher, der unten einen Auslass für abgekühltes Kühlmedium, oben einen Auslass für erhitztes Heizmedium, zwischen den beiden vorerwähnten Auslässen einen Einlass für erhitztes Kühlmedium und zwischen dem Auslass für erhitztes Heizmedium und dem Einlass für erhitztes Kühlmedium einen Einlass für abgekühltes Heizmedium aufweist. Der Wärmepufferspeicher kann ein konventioneller Schichtenspeicher sein, wie er in der Heizungstechnik verwendet wird. Bei dieser Ausgestaltung sind der Kühlkreislauf und der Heizkreislauf über den Schichtenspeicher miteinander verbunden und ist das Kühlmedium zugleich das Heizmedium. Diese Ausgestaltung hat einen vergleichsweise geringen Aufwand.

Gemäß einer anderen Ausgestaltung ist der Wärmepufferspeicher ein Pufferspeicher mit einem Wärmetauscher, dessen Eingang an den Kühlmediumaustritt für erhitztes Kühlmedium des Kühlers und dessen Ausgang an den Kühlmediumeintritt des Kühlers angeschlossen ist, wobei der Wärmepufferspeicher oben einen Austritt für erhitztes Heizmedium aufweist, der mit dem Heizmediumeintritt des Wärmeverbrauchers verbunden ist, und unten einen Eintritt für abgekühltes Heizmedium aufweist, der mit dem Heizmediumaustritt des Wärmeverbrauchers verbunden ist. Bei dieser Ausführung sind der Kreislauf des Kühlmediums und des Heizmediums voneinander getrennt. Dies ermöglicht im Bedarfsfall das Einstellen eines Überdrucks im Kühlkreislauf, um das Verdampfen von Kühlmedium bei starker Erhitzung im Kühler zu vermeiden.

Gemäß einer weiteren Ausgestaltung ist der Wärmeverbraucher eine Einrichtung zum Konditionieren (Konditionierer) des kleinstückigen Materials oder ein anderer Wärmeverbraucher der Anlage zur Herstellung von Holzpellets oder anderen festen Granulaten. Der Wärmebedarf des Wärmeverbrauchers kann insbesondere durch Veränderungen des eingesetzten Ausgangsmaterials oder aufgrund von unterschiedlichen Durchsätzen der Anlage schwanken.

Gemäß einer weiteren vorteilhaften Ausgestaltung weist der Kühlkreislauf und/oder der Heizkreislauf eine Umwälzpumpe auf. Durch Regeln der Umwälzpumpe ist die Kühlung des Materials im Kühler bzw. die Erwärmung des Materials im Konditionierer einstellbar.

Bei einer weiteren Ausgestaltung ist der Einsatz einer Brandschutz- sowie einer Brandlöschanlage vorgesehen. Die Brandschutzanlage weist zum Beispiel Temperatursensoren, Funkenmelder sowie Funkenlöscher auf. Die Brandlöschanlage beinhaltet zum Beispiel eine Stickstoff-Flutanlage inkl. Vorhalten des Stickstoffs sowie eine Einblassanlage. Die Einbringung des Stickstoffs erfolgt voraussichtlich von unten durch den Austragsboden (Schlitzboden).

Gemäß einer weiteren Ausgestaltung ist der Kühler mit einer Einrichtung zum Absaugen von Ausdünstungen und Restdampf verbunden.

Gemäß einer weiteren Ausgestaltung ist der Kühler mit einer Einrichtung zum Absaugen von Ausdünstungen und Restdampf verbunden und in die Einrichtung zum Absaugen eine Wärmerückgewinnung integriert. Hierdurch wird die Energieeffizienz der Anlage weiter verbessert.

Gemäß einer weiteren Ausgestaltung weist der Container definierte Schnittstellen für mindestens eines/einen der nachfolgenden Medien und Ströme auf: Starkstrom, Schwachstrom, Steuerstrom, Speisewasser, Druckluft, Luftabsaugung, Kühlmittel, Wärmeträger, Rohstoff nass, Rohstoff trocken, Feinmaterial, Pellets, Feinanteil/Absieb. Die definierten Schnittstellen vereinfachen das baukastenartige Zusammensetzen der Container zur Anlage bzw. einem wesentlichen Teil derselben.

Gemäß einer weiteren Ausgestaltung sind Container in mindestens einer Gruppe horizontal oder vertikal angeordnet. Dies reduziert den Aufwand für Verbindungsleitungen zwischen den verschiedenen Komponenten und begünstigt eine platzsparende Unterbringung.

Gemäß einer weiteren Ausgestaltung ist mindestens eine Einrichtung zum Lagern ein Schnellbausilo oder eine Schnellbauhalle, das/die separat von den Containern angeordnet ist. Der Einsatz von Schnellbausilos oder Schnellbauhallen ist besonders kostengünstig. Zudem ist die Lagerung von Material in von den Containern separierten Schnellbausilos oder Schnellbauhallen aus Gründen des Brand- und Explosionsschutzes vorteilhaft.

Die Erfindung wird nachfolgend anhand der anliegenden Zeichnungen von Ausführungsbeispielen näher erläutert. In den Zeichnungen zeigen:
- Fig. 1: die Anlage in einer grobschematischen Darstellung;
- Fig. 2: eine erste Variante einer Wärmerückgewinnung in einem Teilschema;
- Fig. 3: eine zweite Variante der Wärmerückgewinnung in einem Teilschema;
- Fig. 4: einen Schachtkühler in einem ersten Vertikalschnitt;
- Fig. 5: den Schachtkühler in einem zweiten Vertikalschnitt;
- Fig. 6: die Rohrmäander des Schachtkühlers in eine Seitenansicht;
- Fig. 7: einen Rohrmäander des Schachtkühlers in einer Vorderansicht;
- Fig. 8: einen weiteren Rohrmäander des Schachtkühlers in einer Vorderansicht;
- Fig. 9: einen Schachtkühler Übersichtszeichnung (Außenansicht);
- Fig. 10: einen Schachtkühler Übersichtszeichnung (Innenanansicht).

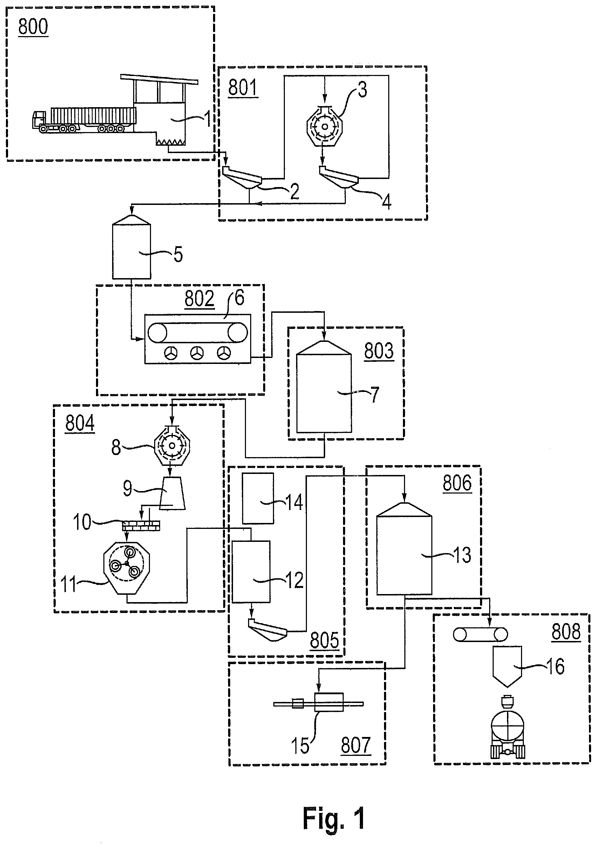

In Fig. 1 ist schematisch ein Ausführungsbeispiel der Erfindung dargestellt. Verschiedene Module 800 bis 808 der Anlage sind durch gestrichelte Linien eingerahmt. Vorzugsweise bestehen die Module aus einem oder mehreren Containern, in denen Komponenten der Anlage enthalten sind. Dies ist im Beispiel bei den Modulen 800, 801, 802, 804, 805 und 807, 808 so ausgeführt. Die Module 803 und 806 sind im Beispiel Silos.

Rohstoff wie z.B. Sägespan wird mit einem LKW angeliefert und in die Rohstoffannahmeeinheit 1 entladen. Ggf. wird der Rohstoff nach Qualität bzw. Eigenschaften auf einem Platz sortiert gelagert und in geeigneten Mischungen der Anlage zugeführt, beispielsweise mittels eines Radladers.

In der Anlage wird Rohstoff mit dem Sieb 2 fraktioniert, Grobfraktion wird in dem Nasszerkleinerer 3 zerkleinert, Feinfraktion dem Puffer- und Dosierbehälter 5 zugefügt. Nach der Zerkleinerung im Nasszerkleinerer 3 und nach dem Passieren des Siebes 4 gelangt die Feinfraktion ebenfalls in den Puffer- und Dosierbehälter 5.

Als nächstes erfolgt die Trocknung im Trockner 6 und anschließende Zwischenlagerung im Lagersilo 7. Im Anschluss erfolgt die dosierte Förderung zur Trockenmühle 8, wo das Material auf die optimale Korngröße zerkleinert wird. Anschließend wird das Material im Konditionierer 9 zur Pressung vorbereitet. Nach dem Passieren der Mischschnecke 10, in der ggf. Bindemittel zugeführt wird, gelangt der vorbereitete Rohstoff in die Presse 11.

Nach dem Pressvorgang in der Presse 11 werden heiße Pellets im Kühler 12 gekühlt und zur Lagerung in das Lagersilo 13 eingebracht. Die Abwärme aus dem Kühlvorgang wird dem Konditionierer 9 dosiert über den Wärmepufferspeicher 14 zugegeben. Nach der Lagerung werden Pellets in der Verpackungsanlage 15 in Kleingebinde verpackt oder direkt als Schüttgut in der Verladeanlage 16 verladen.

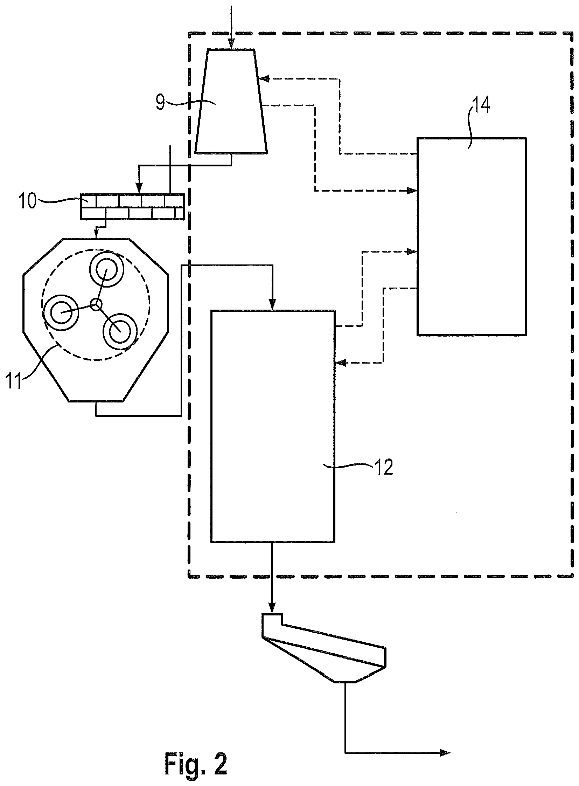

Die Erläuterung der Kühlung der Pellets und Abwärmenutzung erfolgt anhand der Fig. 2.

Über Wärmetauscherflächen im Kühler 12 wird die Wärme von Pellets auf den Wärmeträger (Wasser oder Thermoöl) übertragen und in den Wärmepufferspeicher 14 transportiert. In dem Wärmepufferspeicher 14 steigt warmer Wärmeträger nach oben und sinkt kalter Wärmeträger nach unten ab. Die Wärmeenergie des Wärmeträgers wird bedarfsgerecht zur Vorwärmung und Konditionierung des aufbereiteten Rohstoffes im Konditionierer übertragen. Der Wärmepufferspeicher 14 ist vorzugsweise als Schichtspeicher ausgeführt und kann als Option mit einem elektrischen Heizstab oder einer anderen Fremdheizung zur Temperaturanhebung in Startsequenzen ausgerüstet werden.

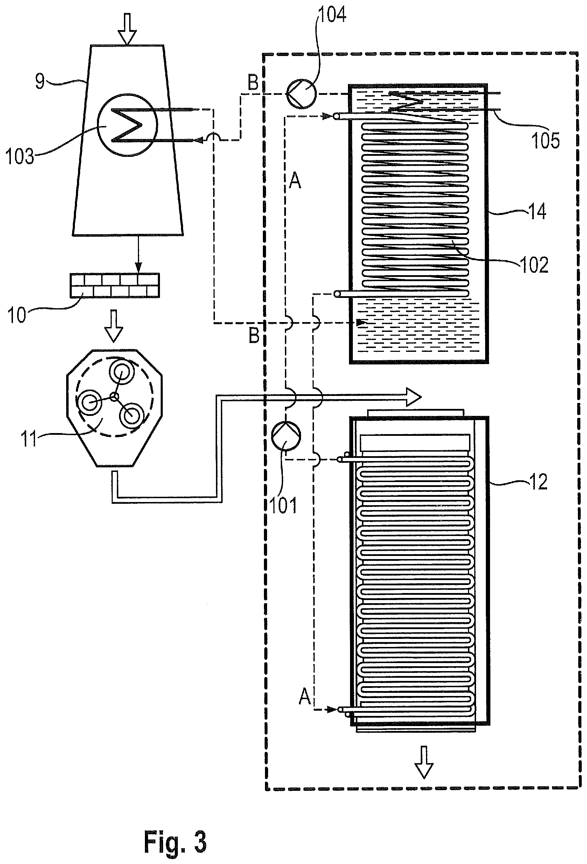

Eine alternative Wärmerückgewinnung wird anhand von Fig. 3 erläutert.

Über Wärmetauscherflächen im Kühler 12 wird die Wärme von Pellets auf den Wärmeträger A (Wasser oder Thermoöl) übertragen und in den Wärmepufferspeicher 14 transportiert. Dabei wird der Wärmeträger A im geschlossenen Kreislauf durch Kühler 12 und Wärmepufferspeicher 14 bewegt und kommt nicht in direkten Kontakt mit dem Wärmeträger B aus dem geschlossenen Kreislauf durch Wärmepufferspeicher 14 und Konditionierer 9. Die Deckung der benötigten Fördermenge wird mittels einer Umwälzpumpe 101 sichergestellt.

In der Ausführungsvariante mit Wasser als Wärmeträger A ist die Regelung der Umwälzpumpe 101 so realisiert, dass die eventuelle Dampfbildung im Rohrsystem durch die Erhöhung der Fördermenge unterbleibt. Eine andere Ausführungsvariante sieht einen Betrieb mit geringem Überdruck vor, um die Dampfbildung zu vermeiden. In diesem Falle wird eine druckfeste Ausführung der Wärmetauscher und Leitungen vorgesehen.

In dem Wärmepufferspeicher 14 erfolgt die Übertragung der Wärmeenergie auf den Wärmeträger B (Wasser), welcher sich im Behälter des Wärmepufferspeichers befindet, durch einen Rohrwärmetauscher 102. Die Wärmeenergie wird bedarfsgerecht zur Vorwärmung und Konditionierung des aufbereiteten Rohstoffes mittels Plattenwärmetauscher 103 im Konditionierer übertragen. Die notwendige Fördergeschwindigkeit wird mittels einer Umwälzpumpe 104 sichergestellt.

Der Wärmepufferspeicher 14 ist vorzugsweise als Schichtspeicher ausgeführt und kann als Option mit einer Fremdheizung (z.B. einem elektrischen Heizstab) 105 zur Temperaturanhebung in Startsequenzen ausgerüstet werden. Die Größe des Wärmepufferspeichers 14 und die Steuerung des Systems ist so ausgelegt, dass die Wärme aus dem Kühler 12 jederzeit gesichert abgeführt werden kann.

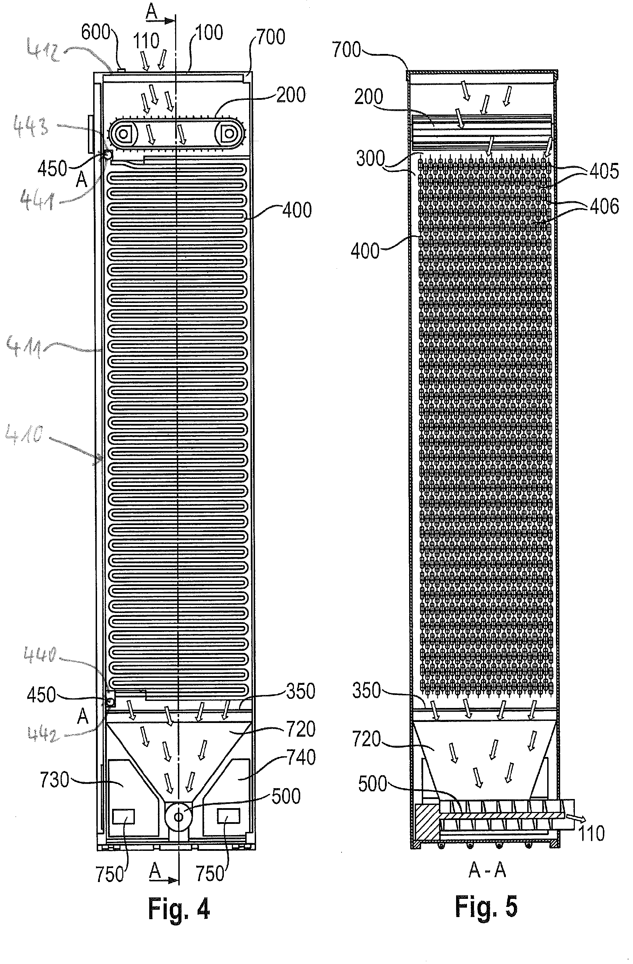

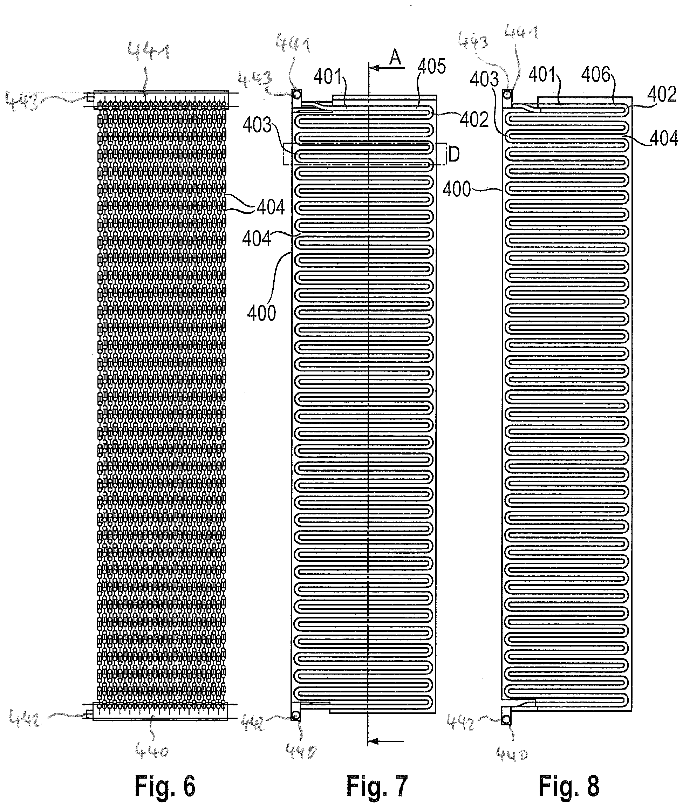

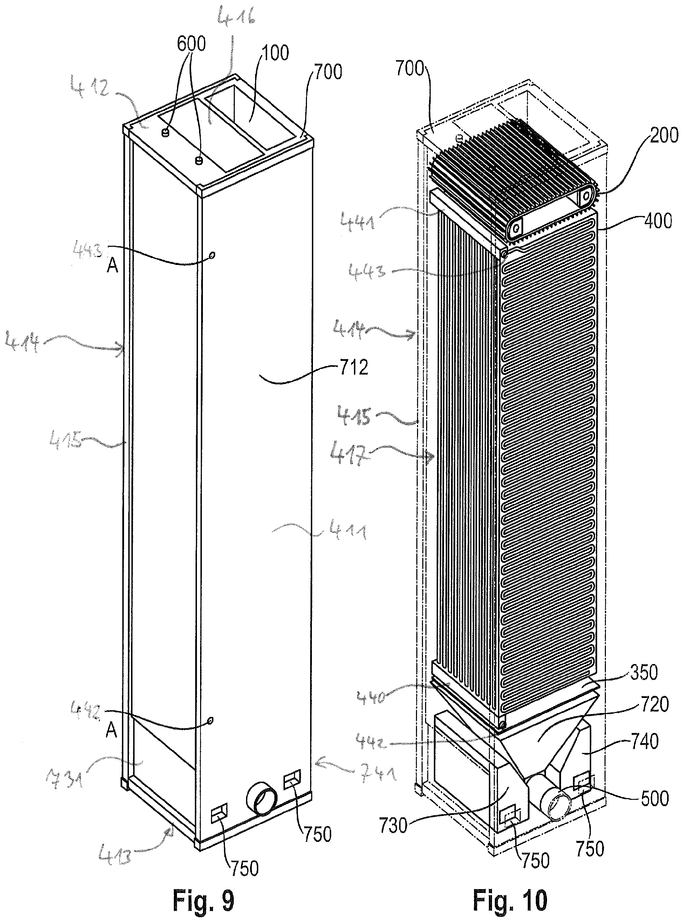

Die Erläuterung der Ausführung und Funktionsweise des Kühlers 12 in Ausführung als Schachtkühler (vgl. Fig. 9 und 10) erfolgt anhand der Fig. 4 bis 10.

Durch die Einfüllöffnung 100 in einer Deckwand 412 eines kastenförmigen Kühlergehäuses 410 werden heiße Pellets (ca. 90 - 100°C) 110 eingeführt, und mit einem unterhalb der Deckwand angeordneten Kratzkettenförderer 200 über parallele vertikale Schächte 300 innerhalb von vier Seitenwänden 411 des Kühlergehäuses 410 verteilt. Ein beweglicher Schlitzboden 350 unterhalb der Schächte 300 bleibt solange geschlossen, bis die Schächte 300 voll sind. Durch Wärmetauscherkörper 400 wird Kühlmittel 450 geführt und nimmt die Wärmeenergie von Pellets 110 auf. Die Pellets 110 rutschen stetig und gleichmäßig in den Schächten 300 nach unten, wobei ihre Geschwindigkeit durch die Spaltgröße im Schlitzboden 350 reguliert wird. Nach Passieren des Schlitzbodens 350 werden die gekühlten Pellets 110 durch einen Austragungstrichter 720 einer Austragungsschnecke 500 zugeführt und von dieser ausgetragen. Der Austragungstrichter 720 begrenzt unten das Kühlergehäuse 410. Die Öffnungen 600 in der Deckwand 412 dienen dem Entweichen der Ausdunstungen und des Restdampfes aus den heißen Pellets 110. Ferner ist in der Deckwand 412 eine Revisionsklappe 416 vorhanden.

In Fig. 4 bis 8 ist die Ausformung der Wärmetauscherkörper 400 dargestellt.

Die Wärmetauscherkörper 400 sind als verbundene Schlangenrohrsysteme ausgeführt. Die Wärmetauscherkörper 400 haben parallele horizontale Rohrabschnitte 401, die an den Enden durch Rohrbögen 402 miteinander verbunden sind, mit denen sie Rohrmäander 403 bilden. Ferner haben sie vertikale Stege 404 zwischen benachbarten horizontalen Rohrabschnitten 401.

Verbaut sind 2 Gruppen 405, 406 von Wärmetauscherkörpern 400, wobei die horizontalen Rohrabschnitte 401 der Wärmetauscherkörper 400 verschiedener Gruppen 405, 406 um einen halben Abstand D zwischen zwei benachbarten horizontalen Rohrabschnitten 401 eines Wärmetauscherkörpers 400 versetzt zueinander sind. Dies führt zu einer Seitwärtsbewegung der Pellets 110 in dem Schacht 300 und einer Vergrößerung der Kontaktfläche. Gleichzeitig erfolgt eine anteilige Umwälzung der Pellets 110 in dem Schacht 300, was die Gleichmäßigkeit der Kühlung verbessert.

Jeder Rohrmäander 403 mündet unten in einem unteren Sammelrohr 440 und oben in einem oberen Sammelrohr 441. Das untere Sammelrohr 440 hat in einer Seitenwand 411 des Kühlers 12 eine untere Öffnung 442, die als Kühlmediumeintritt dient. Das obere Sammelrohr 441 hat an einem oberen Ende in einer Seitenwand 411 des Kühlers 12 eine obere Öffnung 443, die als Kühlmediumaustritt dient. Das Kühlmittel 450 tritt durch die untere Öffnung 442 in den Kühler 12 ein und verlässt ihn durch die obere Öffnung 443.

Eine oder mehrere Komponenten der Anlage sind jeweils vollständig in einem horizontal oder vertikal ausgerichteten Container untergebracht. Ein oder mehrere Container bilden Module 800 bis 808 der Anlage (vgl. Fig. 1).

Fig. 9 und 10 zeigen einen vertikal ausgerichteten Container 700, der einen vollständigen Schachtkühler 712 enthält.

Die Seitenwände 411 und die Deckwand 412 des Kühlergehäuses 410 sind zugleich äußere Wände des Containers 700. Die Seitenwände 411 erstrecken sich vorzugsweise bis zum unteren Ende des Containers 700. Der Container 700 hat vorzugsweise unten eine Bodenwand 413. Vorzugsweise weist der Container 700 einen Rahmen 414 auf und sind die Seitenwände 411, Deckwand 412 und Bodenwand 413 jeweils randseitig in Öffnungen 417 zwischen Rahmenteilen 415 des Rahmens 414 gehalten, um einen zumindest teilweise geschlossenen Rahmen zu bilden. Durch die integrale Ausbildung der Wände 411, 412 und Rahmenteile 415 des Kühlergehäuses 410 und des Containers 700 sind tragende Strukturelemente des Containers 700 zugleich Bestandteile des Kühlers 12 und wird Material und Gewicht eingespart.

Gemäß Fig. 4, 9 und 10 sind in den Freiräumen innerhalb des Containers 700 beidseitig eines Austragungstrichters 720, der die gekühlten Pellets der Austragungsschnecke 500 zuführt, Schaltschränke 730, 740 angeordnet. An den Schaltschränken 730 und 740 befinden sich Schnittstellen 750 für Energie und Daten. Dort weisen vorzugsweise die Wände des Containers 700 weitere Revisionsklappen oder Revisionsöffnungen 731, 741 auf.

### Bezugszeichenliste

- 1: Rohstoffannahmeeinheit
- 2: Sieb
- 3: Nasszerkleinerer
- 4: Sieb
- 5: Puffer- und Dosierbehälter
- 6: Trockner
- 7: Lagersilo
- 8: Trockenmühle
- 9: Konditionierer
- 10: Mischschnecke
- 11: Presse
- 12: Kühler
- 13: Lagersilo
- 14: Wärmepufferspeicher
- 15: Verpackungsanlage
- 16: Verladeanlage
- 100: Einfüllöffnung
- 101: Umwälzpumpe
- 102: Rohrwärmetauscher
- 103: Plattenwärmetauscher
- 104: Umwälzpumpe
- 105: Fremdheizung
- 110: Pellets
- 200: Kratzkettenförderer
- 300: Schacht
- 350: Schlitzboden
- 400: Wärmetauscherkörper
- 401: horizontaler Rohrabschnitt
- 402: Rohrbogen
- 403: Rohrmäander
- 404: vertikaler Steg
- 405: Gruppe
- 406: Gruppe
- 410: Kühlergehäuse
- 411: Seitenwand
- 412: Deckwand
- 413: Bodenwand
- 414: Rahmen
- 415: Rahmenteil
- 416: Revisionsklappe
- 417: Öffnung
- 440: unteres Sammelrohr
- 441: oberes Sammelrohr
- 442: untere Öffnung
- 443: obere Öffnung
- 450: Kühlmittel
- 500: Austragsschnecke
- 600: Öffnung
- 700: Container
- 712: Schachtkühler
- 720: Austragungstrichter
- 730: Schaltschrank
- 731: Revisionsöffnung
- 740: Schaltschrank
- 741: Revisionsöffnung
- 750: Schnittstelle für Energie und Daten
- 800-808: Modul

## Patentansprüche

1. Anlage zur Herstellung von Holzpellets oder anderen festen Granulaten aus kleinstückigem Material organischen und/oder pflanzlichen Ursprungs umfassend Einrichtungen zum Aufgeben (1), Aufbereiten (2 bis 4), Trocknen (6), Pressen (11), Kühlen (12) und Abgeben (16) des Materials, die zumindest teilweise in einzeln transportierbaren und baukastenartig zu zumindest einem wesentlichen Teil der Anlage zusammensetzbaren Containern (700) angeordnet sind, wobei mindestens die Einrichtung zum Kühlen (12) in Ausführung als Schachtkühler (712) vollständig in einem Container (700) angeordnet ist.

2. Anlage gemäß Anspruch 1, wobei die Anlage einen Wärmepufferspeicher (14) umfasst, dem das erhitzte Kühlmedium aus dem Kühlmediumaustritt der Einrichtung zum Kühlen (12) zugeführt und aus dem abgekühltes Kühlmedium abgezogen und dem Kühlmediumeintritt der Einrichtung zum Kühlen (12) zugeführt wird und aus dem erwärmtes Heizmedium abgezogen und dem Heizmediumeintritt eines Wärmeverbrauchers (9) zugeführt und dem abgekühltes Heizmedium aus einem Heizmediumaustritt des Wärmeverbrauchers (9) zugeführt wird.

3. Anlage gemäß Anspruch 1 oder 2, wobei mindestens eine der genannten Einrichtungen zum Aufgeben (1), Aufbereiten (2 bis 4), Trocknen (6), Pressen (11), Kühlen (12) und Abgeben (16) in einem Container (700) mit vertikal ausgerichteter Längsachse angeordnet ist.

4. Anlage gemäß einem der Ansprüche 1 bis 3, wobei mindestens ein Container (700) eine Containerhülle aufweist und mindestens ein Strukturelement (411) einer der genannten Einrichtungen (12) zum Aufgeben (1), Aufbereiten (2 bis 4), Trocknen (6), Pressen (11), Kühlen (12) und Abgeben (16) mindestens teilweise Bestandteil der Containerhülle ist.

5. Anlage nach einem der Ansprüche 1 bis 4, bei der der Container (700) die Abmessungen eines 20-Fuß oder eines 40-Fuß-Containers oder eines anderen Standardcontainers hat.

6. Anlage nach einem der Ansprüche 1 bis 5, bei der der Container (700) einen Rahmen (414) mit mehreren Rahmenteilen (415) aufweist und Öffnungen (417) zwischen Rahmenteilen (415) nicht durch Wände (711) ausgefüllt sind und/oder Öffnungen (417) zwischen Rahmenteilen (415) durch Wände ausgefüllt sind..

7. Anlage nach Anspruch 4 und 6, bei der mindestens ein Strukturelement einer Einrichtung (12) Bestandteil mindestens einer Wand und/oder mindestens eines Rahmenteils (415) des Rahmens (414) des Containers (706) ist.

8. Anlage nach Anspruch 7, bei der mindestens eine Seitenwand (411) einer Einrichtung (12) Bestandteil einer Wand des Containers (700) ist.

9. Anlage nach einem der Ansprüche 1 bis 8, bei der die Einrichtung zum Trocknen (6) ein Bandtrockner ist, der in einem oder mehreren Containern mit horizontal ausgerichteter Längsachse angeordnet ist und/oder bei der die Einrichtung zum Kühlen (12) in einem Container (700) mit vertikal ausgerichteter Längsachse angeordnet ist.

10. Anlage nach einem der Ansprüche 1 bis 9, bei der mindestens eine der nachfolgenden Einrichtungen vollständig in einem Container (700) untergebracht ist: Einrichtung zum Aufgeben (1), Sieb (2, 4), Naßzerkleinerer (3), Puffer- und Dosierbehälter (5), Einrichtung zum Trocknen (6), Trockenmühle (8), Konditionierer (9), Mischschnecke (10), Einrichtung zum Pressen (11), Einrichtung zum Kühlen (12), Wärmepufferspeicher (14), Einrichtung zum Lagern (13) oder Einrichtung zum Abgeben (16) des Materials.

11. Anlage nach einem der Ansprüche 1 bis 10, bei der mindestens eine der nachfolgenden Einrichtungen in einem Container mit horizontal ausgerichteter Längsachse angeordnet ist: Einrichtung zum Aufgeben (1), Einrichtung zum Aufbereiten (2, 3, 4), Einrichtung zum Trocknen (6), Einrichtung zum Pressen (11), Einrichtung zum Abgeben (16) und/oder bei der mindestens eine der nachfolgenden Einrichtungen in einem Container (700) mit vertikal ausgerichteter Längsachse untergebracht ist: Einrichtung zum Zwischenlagern (3), Einrichtung zum Kühlen (12) oder Einrichtung zum Lagern (13).

12. Anlage nach einem der Ansprüche 1 bis 11, bei der der Schachtkühler (712) mehrere Rohrmäander umfasst, die parallel, mit Abstand voneinander und um den halben Abstand ihrer horizontalen Rohrabschnitte (401) höhenversetzt zueinander angeordnet sind, sodass das Material beim Durchlaufen durch die zwischen den Rohrmäandern gebildeten Schächte (300) des Schachtkühlers (712) von den horizontalen Rohrabschnitten (401) der Rohrmäander (403) abwechselnd in die eine und die andere Richtung horizontal abgelenkt wird.

13. Anlage nach Anspruch 12, bei der die horizontalen Rohrabschnitte (401) jedes Rohrmäanders durch vertikale Stege (404) miteinander verbunden sind.

14. Anlage nach einem der Ansprüche 1 bis 13, bei der der Schachtkühler (712) unten einen Austragsboden (350) mit einstellbarem Öffnungsquerschnitt zum Regeln des Füllstandes des Materials innerhalb der Schächte (300) aufweist und/oder oben eine Aufgabeeinrichtung (200) zum gleichmäßigen Verteilen des Materials auf die verschiedenen Schächte (300) aufweist.

15. Anlage nach einem der Ansprüche 2 bis 12, bei der der Wärmepufferspeicher (14) ein Schichtenspeicher ist, der unten einen Auslass für abgekühltes Kühlmedium, oben einen Auslass für erhitztes Heizmedium, oben einen Einlass für erhitztes Kühlmedium und unten einen Einlass für abgekühltes Heizmedium aufweist.

16. Anlage nach Anspruch 15, bei der der Wärmepufferspeicher (14) ein Schichtenspeicher mit einem Wärmetauscher (102) ist, dessen Eingang an den Kühlmediumaustritt für erhitztes Kühlmedium des Kühlers (12) und dessen Ausgang an den Eingang für abgekühltes Kühlmedium angeschlossen ist, wobei der Wärmepufferspeicher (14) oben einen Austritt für erhitztes Heizmedium aufweist, der mit dem Heizmediumeintritt des Wärmeverbrauchers (9) verbunden ist, und unten einen Eintritt für abgekühltes Heizmedium aufweist, der mit dem Heizmediumaustritt des Wärmeverbrauchers (9) verbunden ist.

17. Anlage nach Anspruch 16, bei der der Wärmeverbraucher eine Einrichtung zum Konditionieren (9) des kleinstückigen Materials oder ein anderer Wärmeverbraucher der Anlage ist.

18. Anlage nach einem der Ansprüche 1 bis 17, bei der der Kühler (12) mit einer Einrichtung zum Absaugen von Ausdünstungen und Restdampf verbunden ist und in die Einrichtung zum Absaugen eine Wärmerückgewinnung integriert ist.

19. Anlage nach einem der Ansprüche 1 bis 18, die mehrere Einrichtungen zum Trocknen (6) umfasst, die jeweils vollständig in einem Container (700) angeordnet sind, und/oder die mehrere Einrichtungen zum Kühlen (12) in Ausführung als Schachtkühler (712) aufweist, die jeweils vollständig in einem Container (700) angeordnet sind.

20. Anlage nach einem der Ansprüche 1 bis 19, bei der der Container (700) definierte Schnittstellen für mindestens eines/einen der nachfolgenden Medien und Ströme aufweist: Starkstrom, Schwachstrom, Steuerstrom, Speisewasser, Druckluft, Luftabsaugung, Kühlmittel, Wärmeträger, Rohstoff nass, Rohstoff trocken, Holzmehl, Pellets, Feinanteil.

21. Anlage nach einem der Ansprüche 1 bis 20, bei der die Container horizontal in Gruppen und/oder vertikal in Gruppen angeordnet sind.

22. Anlage nach einem der Ansprüche 1 bis 21, die mindestens eine Einrichtung zum Lagern (3, 7, 13) in der Ausführung als Schnellbausilo oder Schnellbauhalle hat, das/die separat von den Containern (700) angeordnet ist.

## Claims

1. A plant for producing wood pellets or other solid granules from small pieces of material of organic and/or plant origin comprising devices for adding (1), preparing (2 to 4), drying (6), pressing (11), cooling (12) and discharging (16) the material that are at least partially arranged in individual transportable containers (700) that can be assembled like modules for least a major part of the plant, wherein at least the device for cooling (12), when designed as a shaft cooler (712), is completely arranged in a container (700).

2. The plant according to claim 1, wherein the plant comprises a thermal buffer storage tank (14) that is supplied with the heated cooling medium from the cooling medium outlet of the device for cooling (12), and from which cooled cooling medium is removed and supplied to the cooling medium inlet of the device for cooling (12), and from which heated heating medium is removed and supplied to the heating medium inlet of a heat consumer (9), and that is supplied cooled heating medium from a heating medium outlet of the heat consumer (9).

3. The plant according to claim 1 or 2, wherein at least one of the cited devices for adding (1), preparing (2 to 4), drying (6), pressing (11), cooling (12) and discharging (16) is arranged in a container (700) with a vertically oriented longitudinal axis.

4. The plant according to any one of claims 1 to 3, wherein at least one container (700) has a container shell, and at least one structural element (411) of one of the cited devices (12) for adding (1), preparing (2 to 4), drying (6), pressing (11), cooling (12) and discharging (16) is at least partially an element of the container shell.

5. The plant according to any one of claims 1 to 4, wherein the container (700) has the dimensions of a 20-foot or 40-foot container, or another standard container.

6. The plant according to any one of claims 1 to 5, wherein the container (700) has a frame (414) with a plurality of frame parts (415), and openings (417) between frame parts (415) are not filled by walls (711), and/or openings (417) between frame parts (415) are filled by walls.

7. The plant according to claim 4 and 6, wherein the at least one structural element of a device (12) is an element of at least one wall and/or at least one frame part (415) of the frame (414) of the container (706).

8. The plant according to claim 7, wherein the at least one side wall (411) of a device (12) is an element of a wall of the container (700).

9. The plant according to any one of claims 1 to 8, wherein the device for drying (6) is a belt dryer that is arranged in one or more containers with a horizontally oriented longitudinal axis, and/or wherein the device for cooling (12) is arranged in a container (700) with a vertically oriented longitudinal axis.

10. The plant according to any one of claims 1 to 9, wherein at least one of the following devices is completely accommodated in a container (700): Device for adding (1), sieve (2, 4), wet macerator (3), buffer and metering tank (5), device for drying (6), dry mill (8), conditioner (9), mixing screw (10), device for pressing (11), device for cooling (12), thermal buffer storage tank (14), device for storing (13) or device for adding material (16).

11. The plant according to any one of claims 1 to 10, wherein at least one of the following devices is arranged in a container with a horizontally oriented longitudinal axis: Device for adding (1), device for preparing (2, 3, 4), device for drying (6), device for pressing (11), device for discharging (16), and/or wherein at least one of the following devices is located in a container (700) with a vertically oriented longitudinal axis: Device for intermediate storage (3), device for cooling (12) or device for storing (13).

12. The plant according to any one of claims 1 to 11, wherein the shaft cooler (712) comprises a plurality of pipe meanders that are arranged parallel at a distance from each other and are offset in height by one-half the distance of their horizontal pipe sections (401) so that the material is alternately deflected horizontally in one direction and the other direction by the horizontal pipe sections (401) of the pipe meanders (403) while passing through the shafts (300) of the shaft cooler (712) formed by the pipe meanders.

13. The plant according to claim 12, wherein the horizontal pipe sections (401) of each pipe meander are connected to each other by vertical bars (404).

14. The plant according to any one of claims 1 to 13, wherein the shaft cooler (712) has a discharge floor (350) at the bottom with an adjustable opening cross-section to regulate the fill level of the material within the shafts (300), and/or the shaft cooler has a feeding device (200) at the top for evenly distributing material to the various shafts (300).

15. The plant according to any one of claims 2 to 12, wherein the thermal buffer storage tank (14) is a stratified storage tank that has a drain at the bottom for cooled cooling medium, an outlet at the top for heated heating medium, an inlet at the top for heated cooling medium, and an inlet at the bottom for cooled heating medium.

16. The plant according to claim 15, wherein the thermal buffer storage tank (14) is a stratified storage tank with a heat exchanger (102) having an entrance connected to the cooling medium inlet for heated cooling medium of the cooler (12), and having a discharge connected to the entrance for cooled cooling medium, wherein the thermal buffer storage tank (14) has an outlet at the top for heated heating medium that is connected to the heating medium inlet of the heat consumer (9), and has an inlet at the bottom for cooled heating medium that is connected to the heating medium outlet of the heat consumer (9).

17. The plant according to claim 16, wherein the heat consumer is a device for conditioning (9) the small pieces of material or another heat consumer of the plant.

18. The plant according to any one of claims 1 to 17, wherein the cooler (12) is connected to a device for exhausting vapors and residual steam, and heat recovery is integrated into the device for exhausting.

19. The plant according to any one of claims 1 to 18 comprising a plurality of devices for drying (6) that are each completely arranged in a container (700), and/or that has a plurality of devices for cooling (12) designed as shaft coolers (712) that are completely arranged in a container (700).

20. The plant according to any one of claims 1 to 19, wherein the container (700) has specific interfaces for at least one of the following media and flows: High-voltage current, low-voltage current, control current, feedwater, compressed air, air exhaustion, coolant, heat medium, wet raw material, dry raw material, sawdust, pellets and fines.

21. The plant according to any one of claims 1 to 20, wherein the containers are arranged horizontally in groups and/or vertically in groups.

22. The plant according to any one of claims 1 to 21 that has at least one device for storing (3, 7, 13) that is designed has a quick-installation silo or quick-installation hall that is arranged separate from the containers (700).

## Revendications

1. Installation pour la fabrication de pellets de bois ou d'autres granules solides constituées d'un matériau en petits morceaux d'origine organique et/ou végétale, comportant des systèmes de chargement (1), de préparation (2 à 4), de séchage (6), de compression (11), de refroidissement (12) et de distribution (16) du matériau, lesquels sont au moins partiellement disposés dans des conteneurs (700) aptes à être transportés séparément et assemblés à la manière d'un kit pour former au moins une partie substantielle de l'installation, dans laquelle au moins le système de refroidissement (12) conçu comme un réfrigérateur à bacs (712) est entièrement disposé dans un conteneur (700).

2. Installation selon la revendication 1, dans laquelle l'installation comporte un accumulateur de chaleur (14), vers lequel le fluide de refroidissement chauffé est alimenté à partir de la sortie de fluide de refroidissement du système de refroidissement (12) et à partir duquel le fluide de refroidissement refroidi est prélevé et alimenté vers l'entrée de fluide de refroidissement du système de refroidissement (12), et à partir duquel le fluide de chauffage chauffé est prélevé et alimenté vers l'entrée de fluide de refroidissement d'un consommateur de chaleur (9), et vers lequel du fluide de chauffage refroidi est alimenté à partir d'une sortie de fluide de chauffage du consommateur de chaleur (9).

3. Installation selon la revendication 1 ou 2, dans laquelle au moins l'un desdits systèmes de chargement (1), de préparation (2 à 4), de séchage (6), de compression (11), de refroidissement (12) et de distribution (16) est disposé dans un conteneur (700) avec un axe longitudinal orienté verticalement.

4. Installation selon l'une des revendications 1 à 3, dans laquelle au moins un conteneur (700) présente une coque de conteneur et au moins un élément de structure (411) de l'un desdits systèmes (12) de chargement (1), de préparation (2 à 4), de séchage (6), de compression (11), de refroidissement (12) et de distribution (16) fait au moins partiellement partie intégrante de la coque de conteneur.

5. Installation selon l'une des revendications 1 à 4, dans laquelle le conteneur (700) a les dimensions d'un conteneur de 20 pieds ou d'un conteneur de 40 pieds ou d'un autre conteneur standard.

6. Installation selon l'une des revendications 1 à 5, dans laquelle le conteneur (700) présente un cadre (414) avec plusieurs parties de cadre (415) et des ouvertures (417) entre des parties de cadre (415) ne sont pas comblées par des parois (711) et/ou des ouvertures (417) entre des parties de cadre (415) sont comblées par des parois.

7. Installation selon les revendications 4 et 6, dans laquelle au moins un élément de structure d'un système (12) fait partie intégrante d'au moins une paroi et/ou d'au moins une partie de cadre (415) du cadre (414) du conteneur (706).

8. Installation selon la revendication 7, dans laquelle au moins une paroi latérale (411) d'un système (12) fait partie intégrante d'une paroi du conteneur (700).

9. Installation selon l'une des revendications 1 à 8, dans laquelle le système de séchage (6) est un séchoir à bande, lequel est disposé dans un ou plusieurs conteneurs avec un axe longitudinal orienté horizontalement, et/ou dans laquelle le système de refroidissement (12) est disposé dans un conteneur (700) avec un axe longitudinal orienté verticalement.

10. Installation selon l'une des revendications 1 à 9, dans laquelle l'un au moins des systèmes suivants est entièrement logé dans un conteneur (700) : système de chargement (1), tamis (2, 4), broyeur humide (3), réservoir tampon et doseur (5), système de séchage (6), moulin sec (8), conditionneur (9), vis de mélange (10), système de compression (11), système de refroidissement (12), accumulateur de chaleur (14), système de stockage (13) ou système de distribution (16) du matériau.

11. Installation selon l'une des revendications 1 à 10, dans laquelle au moins l'un des systèmes suivants est disposé dans un conteneur avec un axe longitudinal orienté horizontalement : système de chargement (1), système de préparation (2, 3, 4), système de séchage (6), système de compression (11), système de distribution (16) et/ou dans laquelle au moins l'un des systèmes suivants est logé dans un conteneur (700) avec un axe longitudinal orienté verticalement : système de stockage intermédiaire (3), système de refroidissement (12) ou système de stockage (13).

12. Installation selon l'une des revendications 1 à 11, dans laquelle le réfrigérateur à bacs (712) comporte plusieurs méandres de tuyau, lesquels sont disposés parallèlement à distance les uns des autres et mutuellement décalés en hauteur selon la moitié de la distance entre leurs sections de tuyau horizontales (401), de telle façon que du matériau est dévié horizontalement, alternativement dans l'une et l'autre direction, par les sections de tuyau horizontales (401) des méandres de tuyau (403) lors du passage à travers les bacs (300) du réfrigérateur à bacs (712) formés entre les méandres de tuyau.

13. Installation selon la revendication 12, dans laquelle les sections de tuyau horizontales (401) de chaque méandre de tuyau sont reliées entre elles par des barrettes verticales (404).

14. Installation selon l'une des revendications 1 à 13, dans laquelle le réfrigérateur à bacs (712) présente sur le bas un fond de déchargement (350) avec une section transversale d'ouverture réglable pour l'ajustement du niveau de remplissage du matériau à l'intérieur des bacs (300) et/ou sur le haut un système de chargement (200) pour une répartition homogène du matériau entre les différents bacs (300).

15. Installation selon l'une des revendications 2 à 12, dans laquelle l'accumulateur de chaleur (14) est un accumulateur stratifié, lequel présente une sortie sur le bas pour du fluide de refroidissement refroidi, une sortie sur le haut pour du fluide de chauffage chauffé, une entrée sur le haut pour du fluide de refroidissement chauffé et une entrée sur le bas pour du fluide de chauffage refroidi.

16. Installation selon la revendication 15, dans laquelle l'accumulateur de chaleur (14) est un accumulateur stratifié avec un échangeur de chaleur (102), dont l'admission est raccordée à la sortie de fluide de refroidissement pour du fluide de refroidissement chauffé du système de refroidissement (12) et dont l'évacuation est raccordée à l'entrée pour du fluide de refroidissement refroidi, dans laquelle l'accumulateur de chaleur (14) présente une sortie sur le haut pour du fluide de chauffage chauffé, laquelle est reliée à l'entrée de fluide de chauffage du consommateur de chaleur (9), et une entrée sur le bas pour du fluide de chauffage refroidi, laquelle est reliée à la sortie de fluide de chauffage du consommateur de chaleur (9).

17. Installation selon la revendication 16, dans laquelle le consommateur de chaleur est un système de conditionnement (9) du matériau en petits morceaux ou un autre consommateur de chaleur de l'installation.

18. Installation selon l'une des revendications 1 à 17, dans laquelle le système de refroidissement (12) est relié à un système d'aspiration d'émanations et de vapeur résiduelle et un dispositif de récupération de chaleur est intégré dans le système d'aspiration.

19. Installation selon l'une des revendications 1 à 18, laquelle comporte plusieurs systèmes de séchage (6), lesquels sont respectivement entièrement disposés dans un conteneur (700), et/ou laquelle présente plusieurs systèmes de refroidissement (12) conçus comme un réfrigérateur à bacs (712), lesquels sont respectivement entièrement disposés dans un conteneur (700).

20. Installation selon l'une des revendications 1 à 19, dans laquelle le conteneur (700) présente des interfaces définies pour l'un au moins des fluides et flux suivants : flux fort, flux faible, flux de commande, eau d'alimentation, air comprimé, aspiration d'air, agent de refroidissement, agent caloporteur, matière première humide, matière première sèche, farine de bois, pellets, fines.

21. Installation selon l'une des revendications 1 à 20, dans laquelle les conteneurs sont disposés horizontalement par groupes et/ou verticalement par groupes.

22. Installation selon l'une des revendications 1 à 21, laquelle possède au moins un système de stockage (3, 7, 13) conçu comme un silo à montage rapide ou comme un hangar à montage rapide, lequel est disposé séparément par rapport aux conteneurs (700).
